(19)

Europäisches
Patentamt
European
Patent Office
Office européen
des brevets

(11) **EP 3 859 569 A1**

(12) **EUROPEAN PATENT APPLICATION**

(43) Date of publication:
**04.08.2021 Bulletin 2021/31**

(51) Int Cl.:
***G06F 17/18*** *(2006.01)*

(21) Application number: **20154388.1**

(22) Date of filing: **29.01.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventor: **Pandiya, Nimish
70469 Stuttgart (DE)**

(54) **COMPUTER-IMPLEMENTED METHOD AND APPARATUS FOR MODAL PARAMETER ESTIMATION**

(57)     The invention relates to a computer-implemented method for modal parameter estimation based on measured FRF data related to a workpiece, the method comprising the steps of:
- Providing (S1) a transfer function matrix, particularly based on the FRF data;
- Determining (S2-S6) poles each associated with a participation vector and a scaled mode shape vector;
- Performing (S9-S11) interactive model validation to select relevant poles among the determined poles by means of a comparison between the transfer function based on measured FRF data and the transfer function based on FRF data reconstructed by the selected poles and the respectively associated participation vectors and scaled mode shape vectors.

Fig. 3

**Description**

Technical Field

The present invention relates to modal parameter estimation primarily from experimental data acquired from vibrating structures. Particularly, the present invention is related to determine physically valid modal parameters, i.e. natural frequencies, modal damping ratios, mode shape vectors, participation vectors and modal scaling factors from all those that are computed from fitting data to an a-priori model in an interactive manner.

Technical Background

Modal parameter estimation, both experimental and analytical, is a well-documented research field with various algorithms in the time and frequency domain to handle data from vibrating systems. For instance, in Allemang, R. J. et al. ,"A unified matrix polynomial approach to modal identification.", Journal of Sound and Vibration 211.3 (1998): pages 301-322, a unified approach to the process of modal parameter estimation using experimental data is disclosed.
For this process various algorithms are known such as the Least Squares Complex Exponential Approach as disclosed in Brown, D. et al., "Parameter estimation techniques for modal analysis." SAE transactions (1979): pages 828-846 and a combination of the above with the Least Squares Complex Frequency Method, more commonly called PolyMax as disclosed in Peeters, B. et al. "The PolyMAX frequency-domain method: a new standard for modal parameter estimation", Shock and Vibration 11.3, 4 (2004): pages 395-409

Summary of the Invention

According to the present invention, there are provided a method for modal parameter estimation based on experimental data according to claim 1 and the corresponding apparatus according to the further independent claims.
According to a first aspect, a computer-implemented method for modal parameter estimation based on measured FRF data is provided, the method comprising the steps of:

- Providing a transfer function matrix, particularly based on FRF data;
- Determining poles and respectively associated participation vectors and scaled mode shape vectors;
- Performing interactive model validation to select relevant poles among the determined poles by means of a comparison between the transfer function based on measured FRF data and the transfer function based on FRF data reconstructed by the selected poles and the respectively associated participation vectors, and scaled mode shape vectors.

The conventional basic workflow of algorithms for modal parameter identification, as unified under the Unified Matrix Polynomial Approach (UMPA), includes a two-step approach, starting with experimental data obtained e.g. from modal impact hammers and/or shakers as input injection devices and response sensors like accelerometers, strain gauges, laser vibrometers and the like.
Frequency Response Functions (FRFs), such as admittance Frequency Response Functions obtained from actuation sensors and response sensors are usually output by modal data acquisition software and are used as the starting point for this process. Prior signal processing is often needed to minimize random and systematic errors.

$$\underbrace{\begin{Bmatrix} x_1(s) \\ x_2(s) \\ x_3(s) \\ x_4(s) \end{Bmatrix}}_{N_o X 1} = \underbrace{\begin{bmatrix} H_{11}(s) & H_{12}(s) \\ H_{21}(s) & H_{22}(s) \\ H_{31}(s) & H_{32}(s) \\ H_{41}(s) & H_{42}(s) \end{bmatrix}}_{N_o X N_i} \underbrace{\begin{Bmatrix} F_1(s) \\ F_2(s) \end{Bmatrix}}_{N_i X 1}$$

H(s) represents a transfer function and can be determined by experimental data for different frequencies, where $F_1(s)$, $F_2(s)$ corresponds to actuation of a vibration at predetermined positions of a workpiece and $X_1(S)$, $X_2(s)$, $X_3(s)$, $X_4(s)$ to the resulting vibration at different positions of the workpiece, wherein $s = j2\pi f$.
In the first step, the rational fraction polynomial mathematical model is assigned to the FRF data set ($[(\omega)]$) at each frequency value.
A left matrix factor description is shown below, where the sizes of matrices are also indicated in terms of number of outputs (*No*) and number of inputs (*Ni*). In above example, number of inputs is 2 and the number of outputs is 4. However, this is only a representation and can be realized for a general number of inputs (*Ni*) and outputs (No).

$$[H(\omega)]_{N_o \times N_i} = \left[\left[\sum_{i=0}^{m}[\alpha_i]s^i\right]^{-1}\right]_{N_o \times N_i} \left[\sum_{i=0}^{m-1}[\beta_i]s^i\right]_{N_o \times N_i}$$

The number of frequencies is represented by *Nf* and is a count of the number of values taken by *s* based on the experimental data set that is of interest. *Nf* is usually a subset of the complete measured frequency range. For better numerical behaviour of the underlying solvers, *s* is often expressed as an exponential of the measured Hertz frequencies ($\omega$) as $s = e^2{}_{\pi j\omega}{}^\Delta t$ after appropriate frequency shifting process. The time interval according to the Nyquist criterion is represented by $\Delta t$. The model order *m* is usually over-specified to generate all possible estimates of the modes in a given frequency band.

The aforementioned equation may be resolved by a least squares algorithm, overdetermined due to the large number of frequencies in comparison to the number of elements in the unknown matrices $[\alpha_i]$ and $[\beta_i]$.

Various algorithms treat this solution process in this step differently. As an example, $[\beta_i]$ may be eliminated completely from the problem by substituting them in terms of $[\alpha_i]$ matrices. In other cases, $[\beta_i]$ matrices are calculated and then simply discarded. However, no algorithm is known to utilize the $[\beta_i]$ matrices further than this step.

The $[\alpha_i]$ matrices are then used to solve a polynomial Eigen-value problem, with the outcome that natural frequencies (or poles) and state vectors can be obtained. The state vectors are typically truncated to obtain modal participation factors. These poles and modal participation vectors are calculated for each model order m making this an iterative process.

In a second step usually a user interaction is required to compute the remaining modal parameters, typically done by means of visualization of the pole frequencies such as by a stabilisation chart, pole cluster chart, pole density chart or the like. The poles and participation vectors are compared to those in the previous iteration and plotted with various symbols identifying the similarity of the parameter estimates in two consecutive model order iterations. The user is then required to carefully select physical parameter estimates among the calculated and plotted mathematical estimates. This stage is based on user experience and is therefore often prone to errors in parameter estimations.

Once the user has selected the *Nr* number of physical parameters (poles $\lambda r$ and associated participation vectors $\{Lr\}$), the following mathematical model is again solved (typically using a least squares algorithm) to compute the remaining parameters, which include scaled mode shape vectors $\{\psi r\}$ (including the scaling factor *Qr*), associated with the selected set, and the out of band effects represented by the residuals $[LR]$ and $[UR]$.

$$[H(\omega)]_{N_o \times N_i} = [L]_{N_o \times N_i}[s - \lambda]^{-1}_{N_r \times N_r}\left[[\psi]_{N_i \times N_r}\right]^T + \frac{[LR]_{N_o \times N_i}}{s^2} + [UR]_{N_o \times N_i}$$

Here $[s - \lambda]$ is the diagonal matrix constructed using the *Nr* poles and $[L]$ is the matrix constructed using the modal participation vectors, arranged according to the arrangement of the poles.

This second step concludes the modal parameter estimation and the user typically proceeds with the validation of the computed values.

The so estimated modal parameters may then be used for validation and verification of components and system level computer simulation of mechanical structures. Furthermore, the modal parameters can be applied in various applications and are suitable for model order reductions for fast calculations for stress, strain and the like.

One main issue of the above process is included in the required second step. As described above, the $[\beta_i]$ matrices are typically eliminated or left unutilized after the least-squares process of the first step. Proposed method makes use on the significance of these unused matrices and leverages the relationships that can be developed between these matrices and the parameters that are usually estimated at the end of the second step.

The purpose of above method is therefore making available all information about modal parameters that is possible to increase the confidence of selecting valid poles.

By using principles of linear algebra and leveraging properties of the underlying dynamic model, mathematical manipulations are made such that all modal parameters may be estimated before applying the least squares algorithm.

The determining of the poles each associated with a participation vector and a scaled mode shape vector includes expressing the transfer function with terms of rational fraction matrix coefficients $[\alpha i]$ and $[\beta i]$,

$$[H(\omega)]_{N_o \times N_i} = \left[\left[\sum_{i=0}^{m} [\alpha_i] s^i\right]^{-1}\right]_{N_o \times N_i} \left[\sum_{i=0}^{m-1} [\beta_i] s^i\right]_{N_o \times N_i} + \frac{[LR]_{N_o \times N_i}}{s^2} + [UR]_{N_o \times N_i}$$

to obtain a transformed transfer function, wherein m is a predetermined denominator polynomial model order and [*LR*] and [*UR*] indicate lower and upper residuals, respectively.

It may be provided that the transformed transfer function is expressed as

$$\left[\sum_{i=0}^{m} [\alpha_i] s^i\right]_{N_o \times N_o} [H(\omega)]_{N_o \times N_i} = \left[\sum_{i=-2}^{m} [\hat{\beta}_i] s^i\right]_{N_o \times N_i}$$

Or

$$[H(\omega)]_{N_o \times N_i} = \left[\left[\sum_{i=0}^{m} [\alpha_i] s^i\right]^{-1}\right]_{N_o \times N_o} \left[\sum_{i=-2}^{m} [\hat{\beta}_i] s^i\right]_{N_o \times N_i}$$

wherein a least squares algorithm is applied so that the matrix coefficients are determined to create a new matrix-coefficient polynomial.

According to an embodiment, a deconvolution process may be applied to explicitly calculate the original unknown matrices [$\alpha i$], [$\beta i$], [*LR*] and [*UR*].

Particularly, the adjoint polynomial's matrix-coefficients and coefficients of the characteristic equation may be computed. This may be performed by utilizing the algorithm proposed in Vu, Ky M. "An extension of the Faddeev's algorithms." In 2008 IEEE International Conference on Control Applications, pp. 150-155. IEEE, 2008.

Furthermore, the poles may be determined as the complex roots of the denominator polynomial, wherein for the determined poles the participation vectors and scaled mode shape vectors are calculated in the residue form by applying the well known L'Hopitals rule for indeterminate forms.

All parameters, i.e. the poles, the participation vectors and the residue (indicating the participation vectors and the scaled mode shape vectors) may then be used to create a visualization of stabilisation data which may be displayed as a modified stabilisation diagram for the user. The modified stabilisation diagram can be displayed to the user so that the user can select suitable poles while immediately obtaining the results for the selected poles. Upon the selection of suitable poles, the results can be presented so that the user can directly validate the selections made. This interactive process of validating parameters is absent from the current state-of-the-art pole selection procedure due to unavailability of all the modal parameters when the stabilisation diagram is plotted.

Improvements of eliminating the second step from the flow, include that more statistical information is present for construction of the stabilisation chart (also referred to as stability/consistency chart/diagram in various literature sources) as the current algorithms create the stabilisation chart using only the real and imaginary part of the poles ($\lambda$) and the participation vectors {*L*}. The improved stabilisation chart adds the utility to compare scaled modal vectors ({$\psi$}) for each iteration as well.

It is noted that the nomenclature of participation vectors and modal vectors are dependent on the dataset sizes. The state-of-the-art stabilisation diagrams use only one of these two vectors, not both. The improvement of the modified stabilisation chart according to the invention lies in the fact that both these vectors and the scaling factor (included in the so called scaled mode shape or scaled modal vectors) are used, thus representing all the modal parameters that can be associated with the pole.

Furthermore, out-of-band effects may also be included in the stabilisation chart, where another addition to the stabilisation chart is that the lower residuals [*LR*] and the upper [*UR*] residuals are considered from the beginning. Since all the parameters are computed at once, the user has the option of not only validating the selections made for modes within the frequency range of interest, but also the corrective terms relating to out-of-band effects.

Moreover, an interactive validation of the model is possible since the second time consuming pole selection and further calculation step is eliminated with above method. So, the inexperienced user can interactively carry out pole selections and simultaneously validate the model. All validation metrics that are used after the conventional second step are now available at the time of the manual or automatic selection of the poles. This leads to the major improvement that the inexperienced user can exploit mathematical and statistical metrics to carry out the pole selections.

With each selection, the data fit quality between the experimental FRF data and the reconstructed modal FRF data (model-based curves) can be calculated immediately, without the need of an intermediate step

Furthermore, the interactive model validations may include displaying the transfer function based on the measured FRF data and the transfer function based on the reconstructed FRF data, wherein it is queried the selection of poles among the determined poles.

Alternatively, performing the interactive model validation may be automatically performed based on computed deviation between the transfer function based on measured FRF data and the transfer function based on reconstructed FRF data.

The presented invention is based primarily in the frequency domain, although transformation based on the Fourier analysis may be used, as prevalent, to formulate the problem using time domain data. It employs the use of techniques from signal processing, linear algebra and statistical analysis, which are all readily obtainable from cited literature.

According to a further aspect, a system, such as a data processing device, for modal parameter estimation based on measured FRF data is provided, the device being configured to perform the steps of:

- Determining a transfer matrix based on the FRF data;
- Determining poles each associated with a participation vector and a scaled mode shape vector;
- Performing interactive model validation to select relevant poles among the determined poles by means of a comparison between the transfer function based on measured FRF data and the transfer function based on FRF data reconstructed by the selected poles and the respectively associated participation vector and scaled mode shape vector.

Brief description of the Drawings

Embodiments are described in more detail in conjunction with the accompanying drawings in which:

Figure 1    schematically shows a system including a workpiece which is actuated by vibration sources and a vibration response is detected by respective vibration sensors.

Figure 2    a flowchart for illustrating the process of evaluating modal parameters for a workpiece.

Figure 3    shows a flowchart indicating the process of construction of the modified stabilisation chart as a visualization;

Figure 4    shows an exemplary graphical representation of the determined poles, scaled mode shape vectors and residues as a stabilisation chart.

Figure 5    shows a diagram of a reconstructed FRFs compared with the measured FRFs.

Description of Embodiments

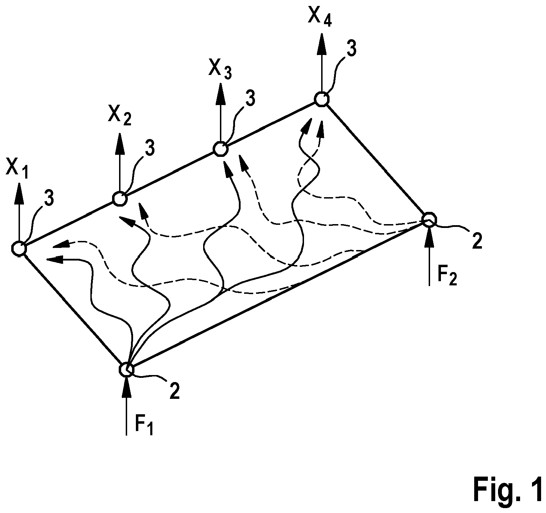

Figure 1 schematically shows the state of measurement on a workpiece 1. The workpiece is excited at one or more positions by means of vibration actuators 2 with actuation $F_1(s)$ and $F_2(s)$ at exciting positions (for two exciting positions). The energy (force) injection is measured using force measurement sensors applied between the force injection at the positions of the of vibration actuators 2 and the workpiece 1. On different vibration response sensing positions (four sensing positions) resulting vibration responses $X_1(S)$, $X_2(s)$, $X_3(s)$, $X_4(s)$ are detected by means of vibration sensors 3.

For measurement of the frequency response functions (FRF) the excitation is made under various vibration frequencies to obtain the respective vibration response at the sensing positions.

The so obtained data is used to define a transfer function H(s) of the frequency response functions, wherein s=j$\omega$ for measured functions

$$\underbrace{\begin{Bmatrix} x_1(s) \\ x_2(s) \\ x_3(s) \\ x_4(s) \end{Bmatrix}}_{N_o X 1} = \underbrace{\begin{bmatrix} H_{11}(s) & H_{12}(s) \\ H_{21}(s) & H_{22}(s) \\ H_{31}(s) & H_{32}(s) \\ H_{41}(s) & H_{42}(s) \end{bmatrix}}_{N_o X N_i} \underbrace{\begin{Bmatrix} F_1(s) \\ F_2(s) \end{Bmatrix}}_{N_i X 1}$$

H(s) represents the transfer function and can be determined by experimental data for different frequencies, where $F_1(s)$, $F_2(s)$ corresponds to actuation of a vibration at predetermined positions of a workpiece and $X_1(S)$, $X_2(s)$, $X_3(s)$, $x4(s)$ to the resulting vibration at different positions of the workpiece. The measured actuation signals $F_1(s)$, $F_2(s)$ may correspond to mechanical vibration, actuating forces or energy injection over time while the resulting effect may be given as a vibrational deflection $X_1(S)$, $X_2(s)$, $X_3(s)$, $X_4(s)$ or the like.

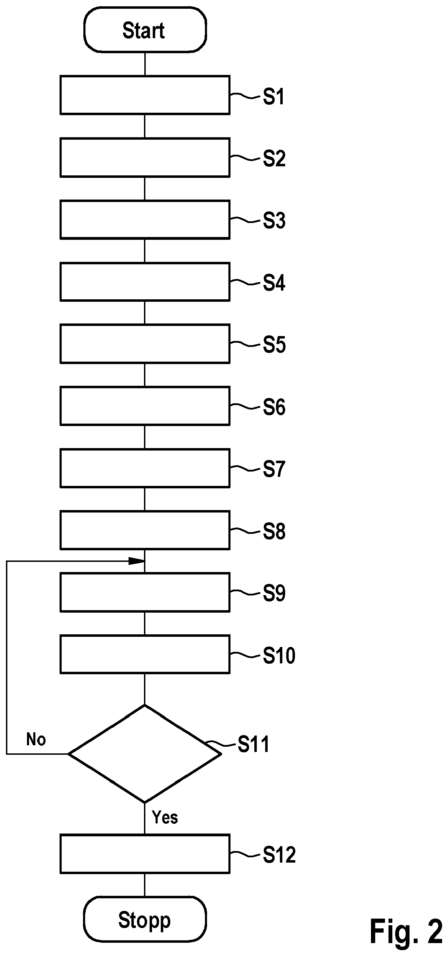

In the following, a method for determining modal parameters of a workpiece is described in detail in conjunction with the flowchart of Figure 2. The method may be implemented in a data processing system using software and/or hardware. The data processing system is provided with input means such as a data memory, a keyboard and the like and output means such as a data storage and display means, such as a display screen.

Pre-processed FRF data obtained as indicated above is provided in step S1.

In step S2, the FRF data is used to formulate the equation as follows:

$$[H(\omega)]_{N_o \times N_i} = \left[\left[\sum_{i=0}^{m}[\alpha_i]s^i\right]^{-1}\right]_{N_o \times N_o} \left[\sum_{i=0}^{m-1}[\beta_i]s^i\right]_{N_o \times N_i} + \frac{[LR]_{N_o \times N_i}}{s^2} + [UR]_{N_o \times N_i}$$

Here the transfer function is expressed with terms of rational fraction polynomial using matrix coefficients $[\alpha_i]$ (labelled as denominator polynomial) and $[\beta_i]$ (labelled as the numerator polynomial), wherein m is a predetermined denominator polynomial model order. Further $[LR]$ and $[UR]$ indicate lower and upper residuals, respectively.

The difference to the conventional approach lies in an explicit inclusion of residual terms, to capture the out-of-band effect, using the lower residuals $[LR]$ and upper residuals $[UR]$.

In step S3, by left multiplication of the inverted matrix-coefficient polynomial (left matrix-factor description MFD)), and rearranging the terms, the following model, to be used for the least squares estimate in step S4 emerges.

$$\left[\sum_{i=0}^{m}[\alpha_i]s^i\right]_{N_o \times N_o} [H(\omega)]_{N_o \times N_i}$$

$$= \left[\sum_{i=0}^{m-1}[\beta_i]s^i\right]_{N_o \times N_i} + \left[\sum_{i=0}^{m}[\alpha_i][LR]s^{i-2}\right]_{N_o \times N_i} + \left[\sum_{i=0}^{m}[\alpha_i][UR]s^i\right]_{N_o \times N_i}$$

It is noted that the description here is made for a left matrix factor model, but this procedure can also be performed on a right matrix factor description by suitably transposing the underlying mathematical models.

In step S4, the terms of the right hand side are collected to be presented as a new matrix-coefficient polynomial. This is represented by the following equation, which is similar, not identical to the one solved by traditional algorithms, and is finally used to create the over-determined system of equations.

$$\left[\sum_{i=0}^{m}[\alpha_i]s^i\right]_{N_o \times N_o} [H(\omega)]_{N_o \times N_i} = \left[\sum_{i=-2}^{m}[\hat{\beta}_i]s^i\right]_{N_o \times N_i}$$

Or

$$[H(\omega)]_{N_o \times N_i} = \left[\left[\sum_{i=0}^{m}[\alpha_i]s^i\right]\right]^{-1}_{N_o \times N_o} \left[\sum_{i=-2}^{m}[\hat{\beta}_i]s^i\right]_{N_o \times N_i}$$

A constraint for limiting the least squares solution for the matrix coefficient has to be applied. For the left matrix factor description, spurious (or computational) poles can be forced to be calculated as unstable by replacing the lowest $[\alpha i]$ matrix coefficient to an identity.

An automated method to assume a model order $m$ is to extend the system of equations to the fully-determined

state. The matrices $[\alpha i]$ and $[\hat{\beta_i}]$ in this equation can be obtained by applying a least squares algorithm using the FRF data.

Once the coefficient matrices $[\alpha i]$ and $[\hat{\beta_i}]$ are estimated, the deconvolution process as indicated by "FLADUNG, JR. A generalized residuals model for the unified matrix polynomial approach to frequency domain modal parameter estimation. Diss. University of Cincinnati, 2001., may be applied to explicitly calculate the original unknown matrices $[\alpha i]$, $[\beta i]$, $[LR]$ and $[UR]$.

$[\hat{\beta_i}]$ can deconvoluted to obtain $[\beta i]$, $[UR]$ and $[LR]$ as follows. This process was first highlighted by Fladung but without explicit consideration of [LR] and [UR], rather with generalized residual terms

$$
\begin{bmatrix} [\beta_0] \\ [\beta_1] \\ [\beta_2] \\ \vdots \\ [\beta_{m-1}] \\ [LR] \\ [UR] \end{bmatrix} = \begin{bmatrix} [0] & [0] & [0] & \cdots & [0] & [\alpha_0] & [0] \\ [0] & [0] & [0] & \cdots & [0] & [\alpha_1] & [0] \\ [I] & [0] & [0] & \cdots & [0] & [\alpha_2] & [\alpha_0] \\ [0] & [I] & [0] & \cdots & [0] & [\alpha_3] & [\alpha_1] \\ \vdots & \vdots & \ddots & \vdots & \vdots & \vdots & \vdots \\ [0] & [0] & [0] & \cdots & [0] & [\alpha_m] & [\alpha_{m-2}] \\ [0] & [0] & [0] & \cdots & [I] & [0] & [\alpha_{m-1}] \\ [0] & [0] & [0] & \cdots & [0] & [0] & [\alpha_m] \end{bmatrix}^{-1} \begin{bmatrix} [\beta_{-2}] \\ [\beta_{-1}] \\ [\beta_0] \\ [\beta_1] \\ \vdots \\ [\beta_{m-2}] \\ [\beta_{m-1}] \\ [\beta_m] \end{bmatrix}
$$

Instead of conventionally computing a polynomial Eigen-value problem, the $[\alpha i]$ matrices are in step S5 used to compute the adjoint polynomial's matrix-coefficients ($[\alpha_i^+]$) and coefficients of the characteristic equation ($[di]$) of the original polynomial to represent the inversion of the alpha-matrix (so called denominator) polynomial. The inverted alpha matrix polynomial is represented as a ratio of its adjoint polynomial and monic characteristic equation such that application of L'Hopitals rule in step S7 is well defined. This is done by using the recursive algorithm detailed in "Vu, Ky M. "An extension of the Faddeev's algorithms." 2008 IEEE International Conference on Control Applications. IEEE, 2008." As a result, the following representation may be achieved.

$$
[H(\omega)]_{N_o \times N_i} = \frac{\left[\sum_{i=0}^{(N_o-1)m}[\alpha_i^+]s^i\right]_{N_o \times N_o} \left[\sum_{i=-2}^{m}[\hat{\beta}_i]s^i\right]_{N_o \times N_i}}{\sum_{i=0}^{N_o m} d_i s^i}
$$

The adjoint polynomial's matrix-coefficients ($[\alpha_i^+]$) and coefficients of the characteristic equation ($[di]$) are calculated as shown below (according to the paper by Vu). First an intermediate steps purely computational $[B_{d,c}]$ matrices and $b_{j,i}$ coefficients are computed recursively as shown starting with the initial condition $[B_{0,c}] = [\alpha_0]^c$.

$$
[B_{d,c}] = \sum_{v=1}^{c}\sum_{w=1}^{d}\left([B_{d-w,c-v}][\alpha_w][\alpha_0]^{v-1}\right)
$$

Where, c = 1,2, ..., $N_o$; d = 0,1, ..., $mN_o$

$$
b_{j,i} = \frac{1}{j}\sum_{c=1}^{j}\sum_{d=0}^{i}\left((-1)^{c-1}b_{j-c,i-d} * \text{trace}\left([B_{d,c}]\right)\right)
$$

Where, i = 0, 1, 2, ..., $mN_o$
The coefficients ($[\alpha_i^+]$) ($[di]$) required are then obtained using:
$d_i = b_{N_o,i}$

$$
[\alpha_i^+] = \sum_{c=0}^{N_o-1}\sum_{d=0}^{i}\left((-1)^c * b_{N_o-1-c,i-d} * \text{trace}\left([B_{d,c}]\right)\right)
$$

The complex natural frequencies or poles $\lambda_r$ are computed in step S6 simply as the complex roots of the denominator polynomial. The complex roots are used to compute the damping ratios ($\zeta$) and the damped natural fre-

quencies ($\omega_d$) using the following equation. These values can then be used in plotting the stabilisation diagram in step S9.

$$\lambda = \sigma + j\omega_d$$

$$\zeta = \frac{\sigma}{\sqrt{\sigma^2 + \omega_d^2}}$$

It is noted that the rational fraction polynomial equation used for the least squares estimate is simply a solved form of the partial fraction representation where the residues [*Ar*] of the poles are represented as functions of the participation and scaled mode shape vectors as shown in the following equation

$$[H(\omega)]_{N_o \times N_i} = \sum_{i=1}^{N_r} \frac{[A_r]_{N_o \times N_i}}{s - \lambda_r} = \sum_{i=1}^{N_r} \frac{\{L\}_{N_o \times 1}\{\{\psi\}_{N_i \times 1}\}^T}{s - \lambda_r}$$

The above equation also indicates the relationship between residues and the participation and scaled mode shape vectors. This is equivalent to stating that the residues are of unity rank. The computation of the residues follows from the following basic algebra-based approach.

$$[A_r]_{N_o \times N_i} = \lim_{s \to \lambda_r} ([H(\omega)](s - \lambda_r))$$

The mathematical representation of the model obtained from Vu's algorithm can be substituted for the transfer function in the expression above.

After noting that the pole $\lambda r$ is a factor of both the numerator and the denominator, in step S7 the well-known L'Hopitals rule for indeterminate forms can be applied and the residues can be computed using basic calculus for differentiation of polynomials as follows.

$$[A_r]_{N_o \times N_i} = \frac{\left[\sum_{i=0}^{(N_o-1)m}[a_i^+]s^i\right]_{N_o \times N_o} \left[\sum_{i=-2}^{m}[\hat{\beta}_i]s^i\right]_{N_o \times N_i}}{T * \sum_{i=0}^{N_o m} id_i s^{i-1}}$$

It must be noted that if transformation of frequencies is carried out, the residue must be inverse-transformed appropriately for consistent results. For the exponential transformation highlighted previously, the transformation factor ($T$) is given by $\lambda_r \Delta t$.

Thus, for each model order iteration, each computed pole $\lambda_r$ has a scaled residue associated with it. The residue thus computed may not be of unity rank in presence of noise in the original dataset, but is transformed using only its largest Singular Value. As a result, the participation vector $\{L_r\}$ and scaled mode shape vectors $\Psi_r$ can be obtained in step S8 by summing along the column and row dimensions to be considered for consistency in the stabilisation chart or as the right and left singular vectors of the Singular value decomposition. Summing the matrix components along the appropriate dimensions is determined by the dimensions of the input and outputs such that the terms participation vector and mode shape vector (scaled or unscaled) may be used interchangibly. It is important to note that the residues computed are scaled and hence the mode shape vectors are obtained also scaled.

Having this complete information for each pole $\lambda_r$, metrics like the FRF synthesis coefficient can be used to perform interactive model validation.

In step S9, resonant frequencies for the poles $\lambda r$, using the determined scaled mode shape vectors and the determined participation vectors can be automatically selected or manually selected by the user through a visualization of the determined poles $\lambda r$, the determined scaled mode shape vectors and the determined participation vectors, particularly by means of a modified version of the stabilisation diagram.

Manual selection can be made using a numerical or graphical representation of the modal characteristics while immediately indicating a representation of modified FRF data for selected poles.

With the determined parameters a visualization, such as a stabilisation chart, can be created which may be displayed as a stabilisation diagram for the user. The modified stabilisation diagram can be displayed to the user so that the user can select suitable poles while immediately obtaining all parameters for the selected poles. Upon the selection of suitable poles, the results can be presented so that the user can directly validate the selections made.

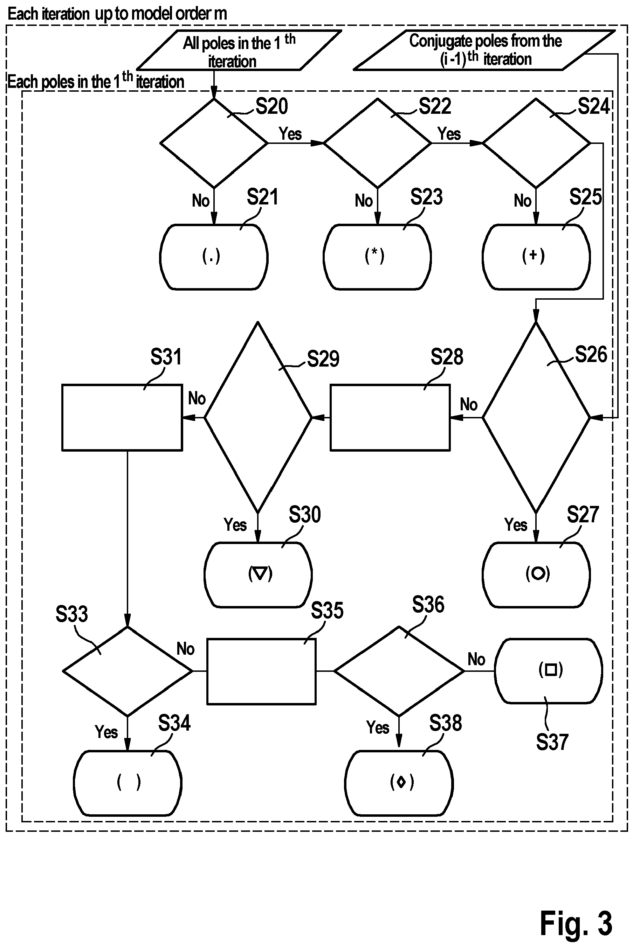

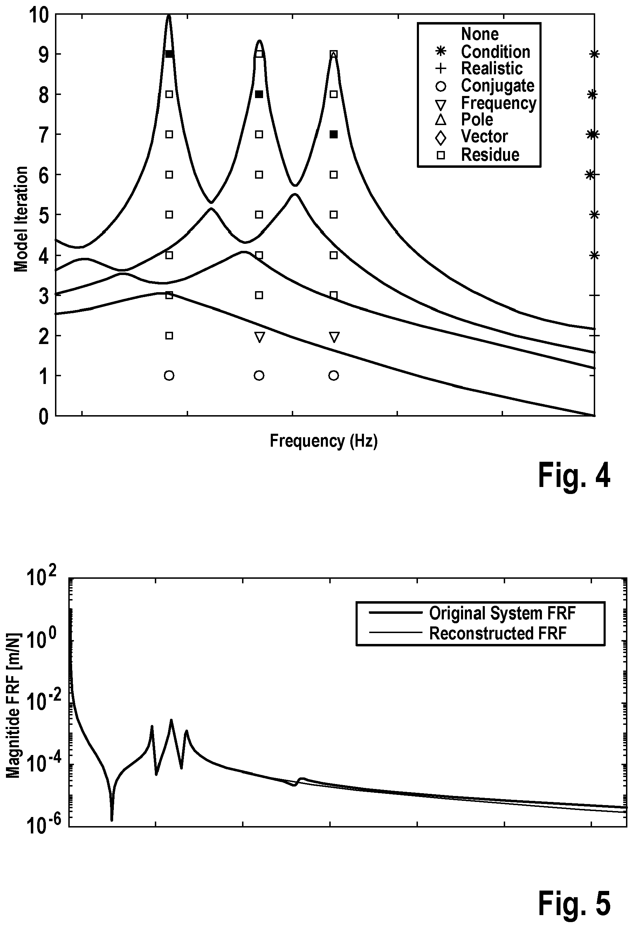

The flowchart for construction of the modified stabilisation diagram (also called stability/consistency chart/diagram) is shown in Figure 3. The poles and participation vectors are compared to those in the previous iteration and may be plotted with various symbols identifying the similarity of the parameter estimates in two consecutive model order iterations. In Figure 4 an exemplary graphical representation of the determined poles, scaled mode shape vectors and residues is shown which include the mode shape vectors and the participation vectors.

The symbols are typically plotted as model iteration against frequency obtained in step S6, although some variations may be seen in the literature.

For each stage in the process of determination of the symbols, a tolerance is user-specified and is allowed to be changed. These tolerances may include a condition number tolerance, Conjugate tolerance, imaginary-part (or frequency) tolerance, real-part (or Pole) tolerance, Vector tolerance and Residue tolerance. It is to be noted that the parameters associated with any poles are not discarded throughout and are in fact used for appropriate comparisons in each stage, as described below. Once a consistency label is assigned to a pole, the process is terminated for that particular pole and is repeated for the next pole of the particular iteration. This process is carried out for all model order iterations (defined by 'm').

Firstly, the condition number (given by the ratio of the lowest and the highest singular values of the data matrix in step S4) for a particular pole is checked in step S20 to be lesser than the tolerance condition number. This comparison ensures the quality of $[\hat{\alpha_i}]$ and $[\hat{\beta_i}]$ obtained from step S4 of the data matrix is better than the user-provided threshold. In case of a true comparison, the check moves to the next stage described below as the 'Realistic' stage. In the case of a false comparison, the pole is assigned a 'None' consistency (.) in in step S21 and the process ends for the pole check.

In the 'Realistic' stage, the real part is checked in step S22 to be a positive or non-positive (negative or zero) value. If the real part is negative, indicating a stable pole calculation, the process proceeds to the next comparison in step S24. In case of the real part of the pole being positive, the pole is assigned a 'Condition' consistency (*) in step S23 and the process ends for the pole under check.

In the next stage of step S24, a conjugate of the pole is searched within the set of the calculated poles for the same iteration, using percentage difference criterion. If the percentage difference is lesser than the specified tolerance, the process proceeds to the next comparison of step S26. In case that the percentage difference is equal to or greater than the tolerance percentage, the pole is assigned 'Realistic' consistency (+) in step S25.

From this stage onwards, the current pole (with its associated parameters) is compared to all the conjugate poles in the previous (i-1)$^{th}$ iteration. A percentage difference between the imaginary parts is determined in step S26. If there exist no poles from the previous iteration for which the percentage difference of the imaginary part of the current pole is lesser than the tolerance percentage-difference defined, the current pole is assigned the 'Conjugate' consistency (O) in step S27. Otherwise, the set of poles from the previous iteration for which the imaginary part percentage difference against the current pole is greater than the real-part percentage tolerance defined, are simply discarded/eliminated from the current comparison cycle in step S28.

This subset of poles from the previous iteration thus obtained are used for calculating the percentage difference between their real parts and the real part of the current pole in step S29. If there is no pole for which the percentage difference thus calculated is lesser than the real-part tolerance-percentage, a 'Frequency' ($\nabla$) consistency is assigned to the current pole in step S30. Otherwise, in step S31 the set of poles from the previous iteration for which the real-part percentage-difference against the real-part of the current pole is greater than the real-part percentage tolerance defined, are again discarded/eliminated from the current comparison cycle.

This subset of poles from the previous iteration thus obtained are used in step S33 for calculating the percentage of similarity between the associated participation vectors and the participation vector of the current pole. The percentage of similarity is computed by using Modal Assurance Criterion (MAC) as defined in "Allemang, Randall J. "The modal assurance criterion-twenty years of use and abuse." Sound and vibration 37, no. 8 (2003): 14-23.". The percentage MAC between any two vectors $\{v_1\}$ and $\{v_2\}$ of the same number of elements may be calculated as shown in the formula.

$$\mathrm{MAC} \, \%_{\{v_1\},\{v_2\}} \; = \; \frac{\left|\{v_1\}^{H}\{v_2\}\right|^2}{\{v_1\}^{H}\{v_1\}\{v_2\}^{H}\{v_2\}} * 100$$

Here, the $\{\cdot\}^{H}$ operator indicates a Hermitian (complex conjugate transpose) of the appropriate vector and $|\cdot|$ indicates the magnitude value. The division is performed element-wise i.e. each element in the numerator is divided by each corresponding element in the denominator.

If there is no pole for which the percentage MAC thus calculated is higher than the vector-tolerance percentage,

a 'Pole' consistency (△) is assigned to the current pole in step S34. Otherwise, in step S35 the set of poles from the previous iteration for which the percentage MAC of the participation vectors against the participation vector of the current pole is greater than the percentage vector-tolerance defined, are again discarded/eliminated from the current comparison cycle. This is the last stage of comparisons for assignment of consistencies in the current state-of-the-art processes.

In the modification proposed to the stabilisation chart due to the present claims, the scaled mode shapes can be compared as well in step S36. The subset of poles (and all associated parameters) from the previous iteration obtained are used for calculating the percentage of similarity (using MAC) between the associated scaled mode shape vectors and the scaled mode shape vector of the current pole. If there is no pole for which the percentage MAC thus calculated is higher than the residue-tolerance percentage, a 'Vector' consistency is assigned to the current pole in step S38. Otherwise, a 'Residue' consistency (□) is assigned to the current pole in step S37. This complete process is started for the next pole in the $i^{th}$ iteration.

The key point is the modification (as indicated in the flowchart) towards the end of the process, where scaled mode shapes (and hence by extension scaled residues) can be compared as well. This provides the user with all modal metrics such that the FRF can be reconstructed using the mathematical model. As indicated previously, the pole selection from the modified stabilisation chart may be performed manually or automatically based on the error between the reconstructed and the measured FRFs.

In Figure 4 an exemplary graphical representation of the determined poles, scaled mode shape vectors and residues is shown which include the mode shape vectors and the participation vectors.

The modified stabilisation chart enables a user to make a comparison not only until the 'vector' (Diamond) consistency stage, but also until the 'Residue' (square) consistency stage.

This means that the residues associated with each poles are also compared for the consistency between two consecutive iterations, providing an additional level of confidence about the validity of the plotted poles.

Since the residues are now estimated and compared the modified stabilisation chart can also be used to reconstruct FRF based on the selections interactively.

As can be seen in the diagram of Figure 4, a reconstructed FRFs is compared with the measured FRFs. It is seen that in the present example the result is highly similar even when the second step is eliminated. This confirms that the algorithm provides expected results but improves on the methodology.

After poles are selected, in step S10 the FRF is reconstructed by the estimated parameters to allow comparison with the original FRF function. In the given band, the poles $\lambda_r$ and the associated scaled residues $[A_r]$ are used for the reconstruction along with the out-of-band residuals represented by [LR] and [UR].

The [LR] and [UR] are calculated for each iteration and can be obtained by averaging the matrices from each model order iteration from which pole selections are made. The equation for the reconstruction of the FRF is as follows:

$$[H(\omega)]_{N_o \times N_i} = \left[ \left[ \sum_{i=0}^{m} [\alpha_i] s^i \right]^{-1} \right]_{N_o \times N_o} \left[ \sum_{i=0}^{m-1} [\beta_i] s^i \right]_{N_o \times N_i} + \frac{[LR]_{N_o \times N_i}}{s^2} + [UR]_{N_o \times N_i}$$

In step S11 it is checked if the reconstructed FRF resembles the original FRF function. If the resemblance between the reconstructed FRF and the original FRF function is not high enough (alternative: no) it is returned to step S9 otherwise (alternative: yes) the process is continued with step S12. This process is performed interactively though manual or automated selection of poles.

In step S12 a simulation of the mechanical behavior of the workpiece 1 in a system regarding the reconstructed FRF function is performed for validation purposes or further use.

It is iterated again that even though a description in the frequency domain is highlighted here, application to time domain data is possible as well.

## Claims

1. Computer-implemented method for modal parameter estimation based on measured FRF data related to a workpiece, the method comprising the steps of:

    - Providing (S1) a transfer function matrix, particularly based on the FRF data;
    - Determining (S2-S6) poles each associated with a participation vector and a scaled mode shape vector;
    - Performing (S9-S11) interactive model validation to select relevant poles among the determined poles by means of a comparison between the transfer function based on measured FRF data and the transfer function based on FRF data reconstructed by the selected poles and the respectively associated participation vectors and scaled mode shape vectors.

2. Method according to claim 1, wherein performing the interactive model validations includes providing (S10) a visualization, particularly displaying the transfer function based on the measured FRF data and the transfer function based on the reconstructed FRF data, wherein it is queried the selection of poles among the determined poles.

3. Method according to claim 1, wherein performing the interactive model validation is automatically performed based on a deviation between the transfer function based on measured FRF data and the transfer function based on reconstructed FRF data.

4. Method according to any of the claims 1 to 3, wherein the determining of the poles each associated with a participation vector and a scaled mode shape vector includes expressing the transfer function with terms of rational fraction matrix coefficients $[\alpha_i]$ and $[\beta_i]$,

$$[H(\omega)]_{N_o \times N_i} = \left[\left[\sum_{i=0}^{m}[\alpha_i]s^i\right]^{-1}\right]_{N_o \times N_o} \left[\sum_{i=0}^{m-1}[\beta_i]s^i\right]_{N_o \times N_i} + \frac{[LR]_{N_o \times N_i}}{s^2} + [UR]_{N_o \times N_i}$$

to obtain a transformed transfer function, wherein m is a predetermined denominator polynomial model order and [LR] and [UR] indicate lower and upper residuals, respectively.

5. Method according to claim 4, wherein the transformed transfer function is expressed as

$$\left[\sum_{i=0}^{m}[\alpha_i]s^i\right]_{N_o \times N_i} [H(\omega)]_{N_o \times N_i} = \left[\sum_{i=-2}^{m}[\hat{\beta}_i]s^i\right]_{N_o \times N_i}$$

Or

$$[H(\omega)]_{N_o \times N_i} = \left[\left[\sum_{i=0}^{m}[\alpha_i]s^i\right]^{-1}\right]_{N_o \times N_o} \left[\sum_{i=-2}^{m}[\hat{\beta}_i]s^i\right]_{N_o \times N_i}$$

wherein a least squares algorithm is applied so that the matrix coefficients are determined to create a new matrix-coefficient polynomial.

6. Method according to claim 5, wherein a deconvolution process is applied to explicitly calculate the original unknown matrices $[\alpha i]$, $[\beta i]$, [LR] and [UR].

7. Method according to claim 6, wherein the adjoint polynomial's matrix-coefficients and coefficients of the characteristic equation are computed.

8. Method according to claim 7, wherein the poles are determined as the complex roots of the denominator polynomial, wherein for the determined poles the participation vectors and scaled mode shape vectors are calculated applying L'Hopitals rule for indeterminate forms.

9. Method according to any of the claims 1 to 8, wherein the reconstructed FRF is used for simulation of the mechanical behavior of the workpiece in a system.

10. Device for modal parameter estimation based on measured FRF data, the device being configured to perform the steps of:

- Providing a transfer function matrix, particularly based on the FRF data;
- Determining poles each associated with a participation vector and a scaled mode shape vector;
- Performing interactive model validation to select relevant poles among the determined poles by means of a comparison between the transfer function based on measured FRF data and the transfer function based on FRF data reconstructed by the selected poles and the respectively associated participation vector and scaled mode shape vector.

11. A computer program product comprising a computer readable medium, having thereon: computer program code means, when said program is loaded, to make the computer execute procedure to perform all steps of the method according to any of the claims 1 to 9.

12. A machine readable medium, having a program recorded thereon, where the program is to make the computer execute a method according to any of the claims 1 to 9.

Fig. 1

Fig. 2

Each iteration up to model order m

All poles in the 1<sup>th</sup> iteration

Conjugate poles from the (i -1)<sup>th</sup> iteration

Each poles in the 1<sup>th</sup> iteration

S20

Yes

S22

Yes

S24

No  S21

No  S23

No  S25

( . )

( * )

( + )

S31

S29

No

S28

No

S26

S33

No

S35

S36

No

( □ )

Yes  S30

Yes  S27

S37

( ▽ )

( O )

Yes  S34

Yes  S38

( )

( ◊ )

Fig. 3

Fig. 4

Fig. 5

Europäisches
Patentamt

European
Patent Office

Office européen
des brevets

# EUROPEAN SEARCH REPORT

**Application Number**

EP 20 15 4388

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 579 243 A (LEVINE RONALD H [US]) 26 November 1996 (1996-11-26) * summary; figure 3 * | 1-12 | INV. G06F17/18 |
| A | CN 107 644 134 B (BEIJING ANWISE TECH CO LTD) 22 January 2019 (2019-01-22) * the whole document * | 1-12 | |
| A | WO 2012/061431 A2 (PURDUE RESEARCH FOUNDATION [US]; BOND RAY [US]; ADAMS DOUGLAS E [US]) 10 May 2012 (2012-05-10) * page 41 - page 46 * | 1-12 | |
| A | EP 2 682 729 A1 (UNIV BRUXELLES [BE]) 8 January 2014 (2014-01-08) * paragraph [0007] - paragraph [0031] * | 1-12 | |

**TECHNICAL FIELDS SEARCHED (IPC)**

G06F

The present search report has been drawn up for all claims

| Place of search | Date of completion of the search | Examiner |
|---|---|---|
| Berlin | 4 August 2020 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 15 4388

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2020

| Patent document cited in search report | | Publication date | Patent family member(s) | | Publication date |
|---|---|---|---|---|---|
| US 5579243 | A | 26-11-1996 | NONE | | |
| CN 107644134 | B | 22-01-2019 | NONE | | |
| WO 2012061431 | A2 | 10-05-2012 | CA 2816700 A1 | | 10-05-2012 |
| | | | EP 2635885 A2 | | 11-09-2013 |
| | | | US 2013298690 A1 | | 14-11-2013 |
| | | | WO 2012061431 A2 | | 10-05-2012 |
| EP 2682729 | A1 | 08-01-2014 | DK 2870450 T3 | | 03-06-2019 |
| | | | EP 2682729 A1 | | 08-01-2014 |
| | | | EP 2870450 A1 | | 13-05-2015 |
| | | | WO 2014006176 A1 | | 09-01-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALLEMANG, R. J. et al.** A unified matrix polynomial approach to modal identification. *Journal of Sound and Vibration 211.3,* 1998, 301-322
- **BROWN, D. et al.** Parameter estimation techniques for modal analysis. *SAE transactions,* 1979, 828-846
- **PEETERS, B. et al.** The PolyMAX frequency-domain method: a new standard for modal parameter estimation. *Shock and Vibration 11.3,* 2004, vol. 4, 395-409
- An extension of the Faddeev's algorithms. **VU, KY M.** 2008 IEEE International Conference on Control Applications. IEEE, 2008, 150-155
- An extension of the Faddeev's algorithms. **VU, KY M.** 2008 IEEE International Conference on Control Applications. IEEE, 2008
- **ALLEMANG ; RANDALL J.** The modal assurance criterion-twenty years of use and abuse. *Sound and vibration,* 2003, vol. 37 (8), 14-23